# EUROPEAN PATENT SPECIFICATION

(11) **EP 4 459 338 B1**
(45) Date of publication and mention of the grant of the patent: **09.09.2026**
(21) Application number: 23461575.5
(22) Date of filing: 05.05.2023
(51) Int. Cl.: G02B 6/14, G02B 6/255

(54) **A METHOD OF FABRICATION OF THERMALLY EXPANDED CORE IN POLARIZATION-MAINTAINING OPTICAL FIBRE, A POLARIZATION-MAINTAINING OPTICAL FIBRE, AND USE THEREOF**
VERFAHREN ZUR HERSTELLUNG EINES THERMISCH EXPANDIERTEN KERNS IN POLARISATIONSERHALTENDEN LICHTLEITFASERN, POLARISATIONSERHALTENDE LICHTLEITFASER, UND VERWENDUNG DESSELBEN
PROCÉDÉ DE FABRICATION DE NOYAU THERMIQUEMENT EXPANSÉ DANS UNE FIBRE OPTIQUE À MAINTIEN DE POLARISATION, FIBRE OPTIQUE À MAINTIEN DE POLARISATION, UND UTILISATION DE CELLE-CI

(43) Date of publication of application: 06.11.2024
(73) Proprietor: Instytut Chemii Fizycznej Polskiej Akademii Nauk, 01-224 Warszawa (PL)
(72) Inventor: Pielach, Mateusz, 20-153 Lublin (PL); Jamrozik, Agnieszka, 30-205 Kraków (PL); Krupa, Katarzyna, 05-070 Sulejówek (PL); Stepanenko, Yuriy, 01-494 Warszawa (PL)
(74) Representative: Witek, Rafal

(56) References cited:
- WO-A1-2015/031333
- US-A1- 2021 011 219
- YOKOTA H ET AL: "DESIGN OF POLARIZATION-MAINTAINING OPTICAL FIBER SUITABLE FOR THERMALLY-DIFFUSED EXPANDED CORE TECHNIQUES", IEICE TRANSACTION ON COMMUNICATION, COMMUNICATIONS SOCIETY, TOKYO, JP, vol. E80-B, no. 4, 1 April 1997 (1997-04-01), pages 516 - 521, XP000721824, ISSN: 0916-8516

## Description

The present invention relates to the field of optical fibre technologies. This solution document discloses a fabrication method of the thermally expanded core (TEC) in optical fibre through the diffusion of the dopants induced by a laser beam. More particularly, it refers to the core expansion in the polarization-maintaining (PM) optical fibre and the application of fibre manufactured by this method for subsequent splicing to TEC optical fibre, thus realizing the mode field adapter (MFA).

Mode field diameter (MFD) mismatch is one of the leading causes of signal loss when splicing two optical fibres with different core diameters, for example, in the case of splicing single-mode fibres (SMF) to large mode area (LMA) fibres {Yablon, Andrew D. Optics of fusion splicing. Springer Berlin Heidelberg, 2005*.}.* The solution to minimize the splice loss is to create an optimal MFA, which, locally, at the splice point, guarantees similar values of MFDs of the two joined optical fibres.

There are two main methods to create an MFA. The first one is based on reducing the diameter of the optical fibre with a larger core, therefore creating a taper matching the MFD of the fibre with a smaller core. A characteristic feature of this solution is that when tapering the bigger fibre, not only its' core diameter is decreased, but also its' cladding diameter is reduced. Thus, this is the most common method when splicing optical fibres with different cladding diameters. However, in the case of splicing optical fibres with the same cladding diameters but different core diameters, the second method of realizing MFAs is preferred. Namely, the TEC technique, which is based on expanding the diameter of the core by the thermal diffusion of the dopants present in the fibre's core. In specific cases, both techniques (taper and TEC) can be used together {Xuanfeng Zhou, Zilun Chen, Hang Zhou, and Jing Hou, "Mode-field adaptor between large-mode-area fibre and single-mode fibre based on fibre tapering and thermally expanded core technique," Appl. Opt. 53, 5053-5057 (2014*)}.*

The TEC method is based on heating the optical fibre to increase its core's temperature, resulting in the thermal diffusion of the dopants present in the core (e.g., GeO₂). The diffusion leads to an increase in the diameter of the core, contributing to an increase in the MFD {M. N. McLandrich, "Core dopant profiles in weakly fused single mode fibres," Electron. Lett. 24, 8-10 (1988*);* Hanafusa, H., M. Horiguchi, and J. Noda. "Thermally-diffused expanded core fibres for low-loss and inexpensive photonic components." Electronics Letters 21.27 (1991): 1968-1969*}.* To induce the diffusion process in the core of the standard optical fibre made from fused silica, it is necessary to use a heat source capable of increasing the temperature of the fibre to at least 1200°C {Fanlong Dong, Xinhai Zhang, and Feng Song, "Thermal expanded core technique applied to high power fibre mode field adapter," Chin. Opt. Lett. 16, 030602- (2018*)}.* It is crucial that the heat source guarantees the possibility of controlling the temperature, as well as the stability of the heating zone during the process. The most common heat sources are a direct flame, a filament (based on a resistively heated element), electric arc discharge, or a CO₂ laser. {*Patent* US6275627*; Patent* US6275627*; Patent* US6840687*;* Wang, B. and Mies, E., "Review of fabrication techniques for fused fibre components for fibre lasers", in Fibre Lasers VI: Technology, Systems, and Applications, 2009, vol. 7195. doi:10.1117/12.807210*}.*

Using a direct flame or a burner is inefficient, the heating time is relatively long, and the ambient environmental conditions significantly impact the stability and repeatability of the process {M. Kihara , M. Matsumoto, T. Haibara and S. Tomita , "Characteristics of thermally expanded core fibre," in Journal of Lightwave Technology, vol. 14, no. 10, pp. 2209-2214, Oct. 1996, doi: 10.1109/50.541209*.}.* Therefore, other heat sources, especially those used in commercially available fibre splicers (e.g., Fujikura, Vytran), have recently become more popular *{Patent* US9377583B2*; Patent* US9268090B2*}.* In the case of using a filament, the problem of a non-uniform heat zone was solved by using an Omega-shaped (Ω) filament. When using an electric arc discharge, better uniformity is provided by a three-electrode arrangement. Nevertheless, the typical length of a section of the heated optical fibre is in the order of hundreds of micrometres. One of the ways to increase the heating zone is to provide a scanning motion of the optical fibre along its axis in a so-called fire polishing process, in which the amplitude of the back-and-forth movement increases. However, such a procedure elongates the entire process. Therefore, a large heating zone is preferred when fabricating a TEC fibre. Moreover, another issue when using an electric arc discharge or a filament, is the purity of the process. The deposits from the electrodes or the filament can generate impurities on the surface of the optical fibre. Those contaminations can act as absorbers, forming local hot spots, and limiting the robustness of the splice, especially in high-power applications. The use of a laser is a way to overcome those problems. A laser beam guarantees the high purity of the heated fibre and makes it possible to extend the heating zone to a length of several millimetres. In addition, the laser provides high precision, stability, repeatability, and simplicity of beam power control. For fused silica fibres, the CO₂ laser is most often used, as the radiation at the wavelength of ten micrometres is well absorbed by the glass.

Regardless of the heat source, an MFA utilizing the TEC technique can be prepared in two ways. The first one uses prior splicing of two fibres having different MFDs, and then heating in the vicinity of the splice point. This solution's disadvantage is that thermal diffusion occurs in both optical fibres. Consequently, both fibres have a locally increased MFD. In order to match the MFDs between the fibres, it is necessary to optimize the parameters of the process so that the diffusion occurs faster for a fibre with a lower MFD. Typically this method is used when splicing two fibres with different core dopants and works well when the diffusion coefficient of the core dopant in the smaller core fibre is larger than the diffusion coefficient of the core dopant in the larger core fibre. The second approach assumes heating a fibre with a smaller MFD first. Then the fibre with an expanded core is precisely cut at the place where the heating was applied, hence in the point where the mode field diameter has been enlarged. The fibre prepared this way is then spliced directly to the optical fibre with a larger MFD.

The greater the difference in the MFD of the fibres, the longer the time necessary to create a TEC. Most of the experiments described in the literature utilize continuous heating of the fibre and can last from a few minutes to several hours {Xuanfeng Zhou, Zilun Chen, Hang Zhou, and Jing Hou, "Mode-field adaptor between large-mode-area fibre and single-mode fibre based on fibre tapering and thermally expanded core technique," Appl. Opt. 53, 5053-5057 (2014*);* Juan Wu, Yinhong Sun, Yanshan Wang, Tenglong Li, Yujun Feng, and Yi Ma "The study of the thermally expanded core technique in end-pumped (N+1)×1 type combiner", Proc. SPIE 9255, XX International Symposium on High-Power Laser Systems and Applications 2014, 92550I (3 February 2015*;* M. Faucher and Y. K. Lize, "Mode Field Adaptation for High Power Fibre Lasers," in Conference on Lasers and Electro-Optics/Quantum Electronics and Laser Science Conference and Photonic Applications Systems Technologies, OSA Technical Digest Series (CD) (Optica Publishing Group, 2007), paper CFI7}. Using a CO₂ laser with a 4.5 mm long heating zone has recently enabled a reduction in the heating time to 5 minutes. (Gongwen Zhu "High efficiency mode field adapters fabricated with CO2 laser splicer", Proc. SPIE 10899, Components and Packaging for Laser Systems V, 108991A (4 March 2019*)).* Nevertheless, the laser-based method required an additional prior splice and, like most of the experiments described in the literature, concerns standard SMF optical fibres with a round, axially symmetric structure.

The challenge is rapidly expanding the fibre's core with an asymmetric geometry, especially in a polarization-maintaining fibre. A typical example is a PANDA-type fibre ("Polarization-maintaining AND Absorption-reducing), which in the structure of its cladding, has additional stressing rods introducing birefringence. For standard fused silica optical fibres, the admixture present in the stress rods is composed of different ions than in the case of the core. Boron dopants, in the form of B₂O₃ admixture, are most often used in the stressing rods. When the heat is applied to a PM fibre to induce TEC, both the core and the stress rods are usually expanded simultaneously. This is since the diffusion coefficients for germanium and boron ions are of the same order of magnitude {H. Yamada and H. Hanafusa, "Mode shape convertor produced by the thermal diffusion of different dopants," in IEEE Photonics Technology Letters, vol. 6, no. 4, pp. 531-533, April 1994, doi: 10.1109/68.281817*.}.* Exceptions constitute heating specially-designed PM fibres *{*Yokota, Hirohisa, Emiko Okitsu, and Yutaka Sasaki. "Design of Polarization-Maintaining Optical Fibre Suitable for Thermally-Diffused Expanded Core Techniques." IEICE transactions on communications 80.4 (1997): 516-521*.}* and exposing the fibre to a relatively low temperature for an extremely long time, of the order of tens of hours {K. Shiraishi, Y. Aizawa and S. Kawakami, "Beam expanding fibre using thermal diffusion of the dopant," in Journal of Lightwave Technology, vol. 8, no. 8, pp. 1151-1161, Aug. 1990, doi: 10.1109/50.57835*.}.* Furthermore, the asymmetric geometry, caused by the presence of the stressing rods, can lead to undesirable effects when using standard TEC manufacturing methods. Those effects include, among others, the deformation of the rods leading to the loss of polarization properties of the fibre (e.g., increasing polarization crosstalk) or uneven expansion of the core resulting in its ellipticity {Azami, Nawfel, Mustapha Zireg, and El Ghalya Bouziane. "Modal Ellipticity Characterization of Thermally Expanded Core Polarization Maintaining Optical Fibres." (2011): 303-305*.}.*

Therefore, there is a need for improved techniques for performing TEC in PM fibres, which are fast and can be applied to PM mode field adapters which allow for reducing the splice loss. Additionally, the modification process should be shorter than a minute and allow to preserve the structure (shape) of stressing rods. The process should be easy to control and have the possibility of automatization. Another need is to provide a method of fabricating mode-field adapters without the necessity of prior splicing fibres, wherein MFA would have a low loss of optical signal, i.e., high transmission of the signal.

Surprisingly, it turned out that by utilizing the rotation of the fibre together with a pulsed exposure to a CO₂ laser radiation, it is possible to thermally expand the core of the polarization-maintaining fibre without deforming its structure, in a quick way. The fibre heating time can be decreased to less than one minute, and the fabrication of the mode field adapter, based on the proposed TEC method, does not require additional prior splicing of the two fibres.

The first object of the invention is a method of fabricating of a thermally expanded core in polarization-maintaining optical fibre, comprising steps of
a) placing an optical fibre devoid of acrylate coating in a holder of a splicer,
b) thermally expanding the core in a portion of the optical fibre,

wherein the portion of the optical fibre is heated to at least 1200°C,
characterised in that said step of placing comprises placing said fibre in a holder of a splicer, and in that said fibre is heated by exposure to a train of laser pulses, and the optical fibre between laser pulses is rotated at least once by an angle of 0.1° to 90° to uniformly heat the fibre.

Preferably the train of laser pulses is a sequence of three to twelve pluses, preferably four laser pulses. In a preferable embodiment the width of a laser pulse is from 1s to 40s, preferably the width of the pulse is from 2s to 5s. In another preferable embodiment the sequence of four laser pulses comprises the first three pulses with a width of 5s and fourth pulse is 2s wide. Preferably interval between each laser pulse is from two seconds to four seconds, wherein preferably the repetition rate of the laser pulses is lower than 1/9Hz.

Preferably the optical fibre is rotated with respect to its longitudinal axis. Preferably the optical fibre is rotated at least by an angle ranging from 10° to 90°. In another preferable embodiment the optical fibre is a PANDA-type or bow-tie optical fibre, wherein preferably the optical fibre is a doped fused silica fibre, preferably with the core doped with GeO₂ and the stressing rods are doped with B₂O₃.

Preferably the optical fibre is heated over a length of 1mm to 10mm, preferably 4mm ± 0.5mm.

In further preferable embodiment power of the laser pulses is at least from 1% to 17% larger than the calibration power of the laser, preferably a CO₂ laser.

Another subject of the invention is a polarization-maintaining optical fibre having a non-expanded portion and portion with thermally expanded core fabricated with the method as defined in the first object of the invention, wherein it comprises an expanded core and expanded stressing rods, wherein the expanded core and the expanded stressing rods are of the same shape as the non-expanded core and the non-expanded stressing rods, and the expanded stressing rods are not distorted and remain with no direct contact with the fibre's expanded core.

Yet another subject of the invention is the use of a polarization-maintaining optical fibre with a thermally expanded core fabricated with the method as defined in the first or as defined in the second subject of the invention for mode-field adapter fabrication.

Further subject of the invention is a method of fabrication of a mode-field adapter comprising the steps of
a) cleaving the first optical fibre at an angle smaller than 2°,
b) splicing the first optical fibre's expanded portion to second optical fibre with a standard calibration power ofa laser, preferably a CO₂ laser,
wherein the first optical fibre is a fibre having a non-expanded portion and a portion polarization-maintaining fibre with a thermally expanded core fabricated with the method as defined in the first subject of the invention or as defined in the second subject of the invention, wherein the second optical fibre is a polarization-maintaining optical fibre, wherein the first optical fibre is cleaved at the centre of the fibre's expanded portion.

Preferably second optical fibre's mode field diameter is larger than the first optical fibre's mode field diameter in its non-expanded portion. Further preferably, the second optical fibre and the first optical fibre have claddings of the same outer diameter.

The further invention discloses a fibre mode-field adapter, characterised in that, comprises a first optical optical fibre spliced to the second optical fibre, wherein the first optical fibre is a polarization-maintaining optical fibre with a thermally expanded core portion fabricated with the method as defined in the first subject of the invention or as defined in the second subject of the invention. Preferably, the transmission loss between the first optical fibre and the second optical fibre is from 0.3dB to 1.1dB, preferably from 0.55dB to 1.01dB, when compared to a splice between the first optical fibre with a non-expanded core and the second fibre. In another preferable embodiment the transmission between the fibres is at least 79%, preferably from 79% to 93%, more preferably from 79,3% to 88.2%..

According to the present invention, it allows for shortening the duration of the TEC manufacturing process (less than one minute). It is also possible to apply the TEC technique to PM fibres while the structure of the stressing rods is preserved. Fibres modified according to the invention make it possible to create a low-loss MFA between two PM fibres. Furthermore, fabrication of the MFA based on the TEC method as in the invention does not require additional prior splicing of the two fibres. The process of the TEC manufacturing is easy to control and automatise and provides TEC fibre of high purity.

The present invention will be described in detail with reference to individual figures which present:
Fig. 1. - a schematic diagram of the system used for TEC fabrication. The heating zone is labelled with a dotted line, where: 1 - front side thermal piles, 2, 3 - cameras, 4 - back side thermal piles, 5, 6, 7 - mirrors, 8 - beam splitter, 9 - safety shutter, 10 - CO2 laser, 11 - fiber with small MFD (Mode Field Ddiameter), 12 - heating zone
Fig. 2 - the cross-sectional end-face images of the PM980 (A) and PLMA-GDF-14/125-UF (B);
Fig. 3 - the cross-sectional end-face images of the PM980 before (A) and after the optimized TEC process (B).

### Example 1.

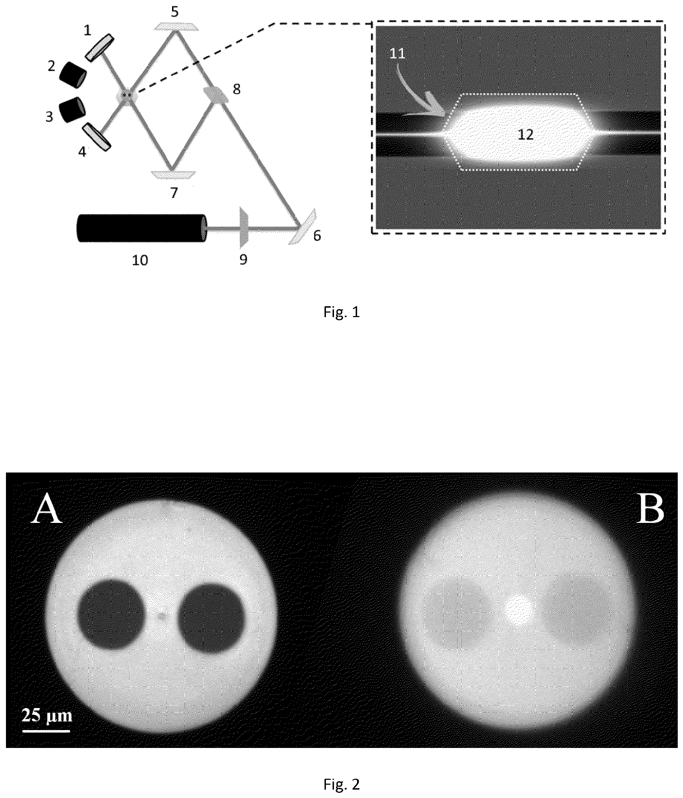

The thermally expanded core fabrication method was practically implemented using the commercially available fibre splicer Fujikura LAZERMaster LZM-100. The fibre splicer guaranteed stability and the ability to control the position of the fibre with respect to the laser beam. Furthermore, the splicer provided the possibility of unlimited rotation (±360°) of the optical fibre along its longitudinal axis with a resolution of 0.01°. A built-in CO₂ laser with a maximum power of 30 W was used as a heat source. This source was sufficient enough to heat the fibre to at least 1200°C as the absorption coefficient of fused silica at this wavelength is over 1000 m⁻¹ (Rei Kitamura, Laurent Pilon, and Miroslaw Jonasz, "Optical constants of silica glass from extreme ultraviolet to far infrared at near room temperature," Appl. Opt. 46, 8118-8133 (2007*)).* The CO₂ laser was operating in a continuous wave mode. However, it could also deliver the heat in the form of pulses with a user-defined time duration ranging from 1 millisecond to 5 minutes and a user-defined repetition rate (from 500 Hz to 1/300 Hz). Fig. 1 presents a schematic diagram of the setup used for fabricating the TEC with the aforementioned fibre splicer. The laser radiation was split into two beams which were then directed to the optical fibre. Two cameras make it possible to observe the optical fibre in real time during the heating process. In the present case, the heating zone spans over a length of (4 ± 0.5) mm. A commercially available optical fibre cleaver Fujikura CT-101 was used to precisely cut the fibre with TEC in the heating zone area. The mode field adapter, which comprised of the splice between the fibre with TEC and the fibre with a larger MFD, was also realized using the fibre splicer Fujikura LAZERMaster LZM-100. To measure the performance of the MFA, i.e., the transmission loss, a single-mode semiconductor laser diode operating at the wavelength of 976 nm (3SP-1999CHP) and a power meter (Ophir 3A) were used.

The TEC fabrication method was verified on commercially available polarization-maintaining optical fibres. The TEC procedure was applied to single-mode single-clad PM980-XP (supplier: Coherent) fibre. The mode field adapter was realized as a splice between the TEC-PM980-XP and PLMA-GDF-14/125-UF (supplier: Coherent). The parameters of the used fibres are specified in Tab. 1. Both fibres are made of fused silica. Their cores are doped with GeO₂, and the stressing rods are doped with B₂O₃. Both fibres are PANDA-type fibres, but the method according to the invention may also be implemented to bow-tie fibres.

**Table 1: Parameters of the used fibres.**

| Parameter/Fibre | PM980-XP | PLMA-GDF-14/125-UF |
|---|---|---|
| Core diameter [µm] | 5.5 | 14 |
| Cladding diameter [µm] | 125 ± 2 | 125 ± 1 |
| Coating diameter [µm] | 245 ± 15 | 245 ± 10 |
| Core numerical aperture | 0.12 | 0.07 |
| Mode field diameter [µm] at 980 nm | 6.6 ± 0.5 | 14 ± 1 |

Due to the difference in MFDs, the direct splice between PM980-XP (PANDA-type fibre) and PLMA-GDF-14/125-UF (PANDA-type fibre) leads to the maximum theoretical transmission of 59.5 % (2.25 dB loss) (Yablon, Andrew D. Optics of fusion splicing. Springer Berlin Heidelberg, 2005*).* The experimentally measured transmission of a direct splice between those fibres was 62.7 % (2.03 dB loss). The mismatch between the theoretical and experimental values of transmission results from the uncertainty of measurement with the used power meter, as well as the tolerance of MFD values provided by the fibre manufacturer.

Fig. 2 presents the cross-sectional end-face images of the two aforementioned optical fibres, showing the difference in the core diameters. The goal of the experiment was to thermally expand the core of the PM980-XP so that it matches the core diameter of PLMA-GDF-14/125-UF fibre.

The process of TEC in the PM980-XP comprised the following steps:
1. Stripping and cleaning the optical fibre to get rid of the acrylate coating.
2. Inserting the fibre into a holder and placing it in the LZM-100 fibre splicer so that the optical beam is directed from both sides to the optical fibre over a length of 4 ± 0.5 mm (Fig. 1).
3. Applying heat to the fibre by exposing it to CO₂ laser radiation (working in a CW mode). For this purpose, PM980-XP was exposed to four laser pulses with a repetition rate of 1/9 Hz. All four pulses were characterized by the laser power 16.8 % larger than the calibration power of the CO₂ laser, where the calibration power is optimal for splicing two PM980-XP fibres together. This power was high enough to heat the fibre over 1200°C. The first three pulses lasted 5 seconds, and the fourth pulse lasted 2 seconds. In between subsequent pulses, the fibre was rotated by 90 degrees. Overall, the total heating time was 17 seconds. The procedure can be described by the following steps:
   a) 5 seconds pulse
   b) Rotation of the fibre by 90 degrees along its longitudinal axis (4 seconds)
   c) 5 seconds pulse
   d) Rotation of the fibre by 90 degrees along its longitudinal axis (4 seconds)
   e) 5 seconds pulse
   f) Rotation of the fibre by 90 degrees along its longitudinal axis (4 seconds)
   g) 2 seconds pulse.

When taking into account the time for rotating the fibre, the whole procedure of expanding the core was shorter than 30 seconds, which is significantly shorter than the experiments described in the prior art. During the process the optical fibre is exposed to laser radiation over a certain length, between 1 millimetre and 10 millimetres. In the above example the heating zone was 4 ± 0.5 mm. One may assume that the length of the heating zone is the length where fibre was expanded during the process. The core of the optical fibre increased its diameter due to the diffusion of the dopant ions due to high temperature exceeding 1200°C. What is important effect of the used method, is that the fibre's core after expanding is not in direct contact with the stressing rods, i.e., the core remains surrounded by the cladding.

It is not necessary to rotate the fibre between each pulse. The fibre must be rotated at least once during the whole process to guarantee heat dissipation as uniform as possible with regard to the angular position of the stressing rods. Moreover, there is no necessity to rotate the fibre by an angle of 90°. The fibre may be exposed to any number of laser pulses in a given angular position and then rotated. The fibre may be rotated by any angle from 0.1° to 90° in both directions, i.e., +90° or -90°. The purpose of rotating the fibre is to uniformly heat the core and maintain the circular shape of the stressing rods.

Another feature is that any experimental setup, as on Fig. 1, may be utilized only if the used laser operates at a wavelength that is well absorbed by the optical fibre, i.e., where the absorption coefficient is larger than 1000 m⁻¹ (Yang, Steven & Matthews, Manyalibo & Elhadj, Selim & Cooke, Diane & Guss, Gabriel & Draggoo, Vaughn & Wegner, Paul. (2010). Comparing the use of mid-infrared versus far-infrared lasers for mitigating damage growth on fused silica. Applied Optics - APPL OPT. 49. 10.1364/AO.49.002606*).*

Once the TEC-PM980-XP was made, MFA was fabricated, which included the following steps:
1. Cleaving the first fibre (TEC-PM980-XP) in the centre of the expanded portion of the fibre, preferably with tolerance of ±25% length of the expanded portion, using a diamond blade of optical fibre cleaver Fujikura CT-101, so that the cleave angle is less than 2°,
2. Splicing the TEC-PM980-XP to PLMA-GDF-14/125-UF using the standard calibration power.

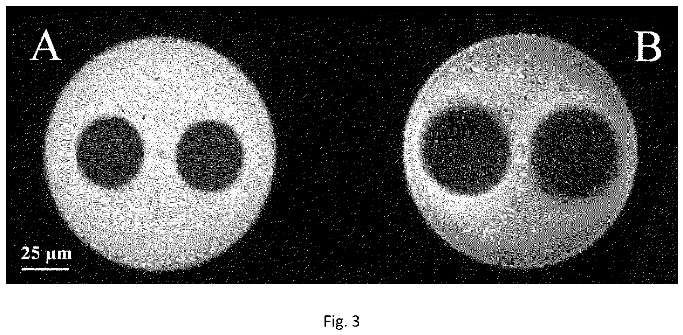

Fig. 3(A) presents the cross-sectional end-face image of the initial fibre, while the cross-sectional end view of the TEC-PM980-XP is shown in Fig. 3(B). The presented method allowed for expanding the mode field diameter by (5 ± 0.5) µm from initial (6.6 ± 0.5) µm to about (10.6 ± 0.5) µm. Due to the applied temperature, the diameter of the stressing rods also increased. Thanks to the fibre rotation, the core and the stressing rods, expanded evenly and preserved their circular shape. The stressing rods diameter is less important than other features of the fibre modified with method according to the invention, e.g., MFD. In the case of the core or stressing rods matter of significant importance is that stressing rods are not distorted, and simultaneously the diameter of the core is increased. In addition, it must be ensured that there is no direct contact between the core and the stressing rods, as well as no direct contact between the stressing rods and the air, i.e., the stressing rods should be surrounded by a cladding, and it is the cladding that should be the boundary with the air.

Thanks to an increased MFD of TEC-PM980-XP, the maximum theoretical transmission in a direct splice between TEC-PM980-XP and PLMA-GDF-14/125-UF is 92.6 % (0.33 dB loss). The cleaved TEC fibre was spliced to the PLMA-GDF-14/125-UF fibre using a standard PM splicing procedure. To verify the transmission of the splice light from a single-mode semiconductor laser diode operating at the wavelength of 976 nm (3SP-1999CHP) has been coupled to the MFA and the optical power at the output has been measured via a power meter (Ophir 3A). The experimentally measured transmission of a direct splice between TEC-PM980-XP and PLMA-GDF-14/125-UF was 88.2% (0.55 dB loss), which proved that the method of the present invention can be used to create a low-loss link between two optical fibres with different MFDs. Finally, the desired final value of the MFD after TEC depends on the application. The extent to which the core is increased is limited, among others, by the stressing rods.

It should be noted that the present invention is not limited to optical fibres containing only two dopants (GeO₂ and B₂O₃). Suitable parameters of the process (including laser power, duration of the pulses, and rotation of the fibre) for different fibres can be determined empirically. According to the described method of the TEC in PM fibres, fabrication time is reduced compared to the conventional methods with continuous heating. *{*Gongwen Zhu "High efficiency mode field adapters fabricated with CO2 laser splicer", Proc. SPIE 10899, Components and Packaging for Laser Systems V, 108991A (4 March 2019*);}.*

The above-mentioned procedure of TEC was applied to the PM980-XP fibre with different parameters of the process, which gave the results as in the following examples.

### Example 2.

In this example the optical fibre has been manufactured in a similar way as in the Example 1, but with different processing parameters. The fibre has been exposed to 7 pulses, each lasting 2 seconds with laser power 16.8% higher than the calibration value, with 2 seconds intervals between them (repetition rate 1/4 Hz). This power was high enough to heat the fibre over 1200°C. In between each of the pulses, the fibre was rotated by 30°. The following sequence was repeated 7 times:
a) 2 seconds pulse
b) Rotation of the fibre by 30° along its longitudinal axis (2 seconds)

In this example, the measured transmission of a direct splice between TEC-PM980-XP and PLMA-GDF-14/125-UF was 81.2 % (0.904 dB loss).

### Example 3.

In this example the optical fibre has been manufactured in a similar way as in the Example 1, but with different processing parameters. The fibre has been exposed to 12 pulses, each lasting 1 second with laser power 16.8% higher than the calibration value, with 2 seconds intervals between them (repetition rate 1/3 Hz). This power was high enough to heat the fibre over 1200°C. In between each of the pulses, the fibre was rotated by 10°. The following sequence was repeated 12 times:
a) 1 second pulse,
b) Rotation of the fibre by 10° along its longitudinal axis (2 seconds).

In this example, the measured transmission of a direct splice between TEC-PM980-XP and PLMA-GDF-14/125-UF was 79.3 % (1.01 dB loss).

### Example 4.

In this example the optical fibre has been manufactured in a similar way as in the Example 1, but with different processing parameters. The fibre has been exposed to 3 pulses, each lasting 40 seconds with laser power 1.25% higher than the calibration value, with 4 seconds intervals between them (repetition rate 1/44 Hz). In between each of the pulses, the fibre was rotated by 90°. The following sequence was repeated 3 times:
a) 40 seconds pulse,
b) Rotation of the fibre by 90° along its longitudinal axis (4 seconds),

In this example, the measured transmission of a direct splice between TEC-PM980-XP and PLMA-GDF-14/125-UF was 85.2 % (0.693 dB loss).

## Claims

1. A method of fabrication of a thermally expanded core in a polarization-maintaining optical fibre, comprising the steps of:
a) placing an optical fibre devoid of acrylate coating,
b) thermally expanding the core in a portion of the optical fibre,
wherein the portion of the optical fibre is heated to at least 1200°C,
**characterised in that** said step of placing comprises placing said fibre in a holder of a splicer, and **in that** said fibre is heated by exposure to a train of laser pulses, and the optical fibre between laser pulses is rotated at least once by an angle of 0.1°to 90° to uniformly heat the fibre.

2. The method according to claim 1, **characterised in that** the train of laser pulses is a sequence of three to twelve pulses, preferably four laser pulses.

3. The method according to claim 2, **characterised in that** the width of a laser pulse is from 1 s to 40 s, preferably the width of the pulse is from 2 s to 5 s.

4. The method according to claim 2 or 3, **characterised in that** the sequence of four laser pulses comprises the first three pulses with a width of 5 s and the fourth pulse with a width of 2 s.

5. The method according to claim 1 or 4, **characterised in that** the interval between each laser pulse is from 2 s to 4 s.

6. The method according to claim 1, **characterised in that** the optical fibre is rotated with respect to its longitudinal axis.

7. The method according to any one of claims 1 to 6, **characterised in that** the repetition rate of the laser pulses is lower than 1/9 Hz.

8. The method according to claim 1 or 4, **characterised in that** the optical fibre is heated over a length of 1 mm to 10 mm, preferably 4 mm ± 0.5 mm.

9. The method according to claim 1 or 8, **characterised in that** the optical fibre is rotated at least by an angle ranging from 10° to 90°.

10. The method according to claim 1, 8 or 9, **characterised in that** the optical fibre is a PANDA-type or bow-tie optical fibre.

11. The method according to claim 1, 8, 9 or 10, **characterised in that** the optical fibre is a doped fused silica fibre, preferably with the core doped with GeO₂ and the stressing rods doped with B₂O₃.

12. The method according to claim 1, 8, 9 or 10, **characterised in that** the power of the laser pulses is at least from 1% to 17% larger than the calibration power of the laser, preferably a CO₂ laser.

13. A polarization-maintaining optical fibre having a non-expanded portion and a portion with a thermally expanded core fabricated with the method as defined in claim 1, **characterised in that** it comprises an expanded core and expanded stressing rods, wherein the expanded core and the expanded stressing rods are of the same shape as the non-expanded core and the non-expanded stressing rods, and the expanded stressing rods are not distorted and remain with no direct contact with the fibre's expanded core.

14. A use of a polarization-maintaining optical fibre with a thermally expanded core fabricated with the method as defined in claim 1 or as defined in claim 13 for mode-field adapter fabrication.

15. A method of fabrication of a mode-field adapter comprising the steps of:
a) cleaving the first optical fibre at an angle smaller than 2°,
b) splicing the first optical fibre's expanded portion to the second optical fibre with a standard calibration power of a laser, preferably a CO₂ laser,
wherein the first optical fibre is a polarization-maintaining fibre having a non-expanded portion and a portion with a thermally expanded core fabricated with the method as defined in claim 1 or as defined in claim 13,
wherein the second optical fibre is a polarization-maintaining optical fibre,
wherein the first optical fibre is cleaved at the centre of the fibre's expanded portion.

16. The method of fabrication of a mode-field adapter according to claim 15, **characterised in that** the second optical fibre's mode field diameter is larger than the first optical fibre's mode field diameter in its non-expanded portion.

17. The method of fabrication of a mode-field adapter according to claim 15 or 16, **characterised in that** the second optical fibre and the first optical fibre have claddings of the same outer diameter.

18. A fibre mode-field adapter, **characterised in that** it comprises the first optical fibre spliced to the second optical fibre,
wherein the first optical fibre is a polarization-maintaining optical fibre with a thermally expanded core portion fabricated with the method as defined in claim 1 or as defined in claim 13.

19. The fibre mode-field adapter according to claim 18, **characterised in that** the transmission loss between the first optical fibre and the second optical fibre is from 0.3 dB to 1.1 dB, preferably from 0.55 dB to 1.01 dB.

20. The fibre mode-field adapter according to claim 19, **characterised in that** the transmission between the fibres is at least 79%, preferably from 79% to 93%, more preferably from 79.3% to 88.2%.

## Patentansprüche

1. Verfahren zur Herstellung eines thermisch expandierten Kerns in einer polarisationserhaltenden Glasfaser, umfassend die Schritte:
a) Einlegen einer von der Acrylat-Schutzbeschichtung befreiten Glasfaser in den Faserhalter eines Spleißgerätes,
b) thermisches Expandieren des Kerns in einem Abschnitt der Glasfaser,
**dadurch gekennzeichnet, dass** der Abschnitt der Glasfaser durch Behandlung mit einer Laserpulsfolge auf wenigstens 1200°C erhitzt wird.
und die Glasfaser zwischen den Laserpulsen mindestens einmal um einen Winkel von 0,1° bis 90° gedreht wird, um die Faser gleichmäßig zu erhitzen.

2. Verfahren nach Anspruch 1, **dadurch gekennzeichnet, dass** die Laserpulsfolge eine Sequenz von drei bis zwölf Pulsen, vorzugsweise vier Laserpulsen ist.

3. Verfahren nach Anspruch 2, **dadurch gekennzeichnet, dass** die Laserpulsbreite von 1s bis 40 s, vorzugsweise von 1 Sekunde bis 40 Sekunden beträgt.

4. Verfahren nach Anspruch 2 oder 3, **dadurch gekennzeichnet, dass** die Sequenz von vier Laserpulsen die drei ersten Pulse mit einer Breite von fünf Sekunden und den vierten Puls mit einer Breite von zwei Sekunden umfasst.

5. Verfahren nach Anspruch 1 oder 4, **dadurch gekennzeichnet, dass** das Intervall zwischen den Laserpulsen jeweils zwei bis vier Sekunden beträgt.

6. Verfahren nach Anspruch 1, **dadurch gekennzeichnet, dass** die Glasfaser um ihre Längsachse gedreht wird.

7. Verfahren nach Anspruch 1 bis 6, **dadurch gekennzeichnet, dass** die Wiederholrate der Laserpulse kleiner als 1/9 Hz ist.

8. Verfahren nach Anspruch 1 oder 4, **dadurch gekennzeichnet, dass** die Glasfaser auf einer Länge von 1 mm bis 10 mm, bevorzugt 4 mm ± 0,5 mm, erhitzt wird.

9. Verfahren nach Anspruch 1 oder 8, **dadurch gekennzeichnet, dass** die Glasfaser um einen Winkel von mindestens 10° bis 90° gedreht wird.

10. Verfahren nach Anspruch 1, 8 oder 9, **dadurch gekennzeichnet, dass** die Glasfaser eine PANDA- oder Bow-Tie- Glasfaser ist.

11. Verfahren nach Anspruch 1, 8, 9 oder 10, **dadurch gekennzeichnet, dass** die Glasfaser eine dotierte Siliziumdioxidfaser ist, der Kern bevorzugt mit GeOz dotiert ist und die Spannungsstäbe mit B2O3 dotiert sind.

12. Verfahren nach Anspruch 1, 8, 9 oder 10, **dadurch gekennzeichnet, dass** die Leistung der Laserpulse mindestens 1 % bis 17 % größer als die Kalibrierleistung des Lasers, bevorzugt eines CO2-Lasers, ist.

13. Eine polarisationserhaltende Glasfaser, aufweisend einen nicht expandierten Abschnitt sowie einen Abschnitt mit thermisch expandiertem Kern, hergestellt nach dem Verfahren nach Anspruch 1, **dadurch gekennzeichnet, dass** sie einen expandierten Kern und expandierte Spannungsstäbe umfasst, wobei der expandierte Kern und die expandierten Spannungsstäbe die gleiche Form haben wie der nicht expandierte Kern und die nicht expandierten Spannungsstäbe, und die expandierten Spannungsstäbe nicht verzerrt sind und nicht mit dem expandierten Kern der Faser in Kontakt bleiben.

14. Verwendung der polarisationserhaltenden Glasfaser mit thermisch expandiertem Kern, das nach dem Verfahren nach Anspruch 1 oder nach Anspruch 12 hergestellt ist, zur Herstellung eines Modenfeldadapters.

15. Verfahren zur Herstellung eines Modenfeldadapters, umfassend die Schritte:
a) Brechen der ersten Glasfaser mit einem Winkel unter 2°,
b) Spleißen des expandierten Abschnitts der ersten Glasfaser mit der zweiten Glasfaser unter Anwendung der Standard-Kalibrierleistung des Lasers, bevorzugt eines CO2-Lasers,
wobei die erste Glasfaser eine polarisationserhaltende Glasfaser ist, die einen nicht expandierten Abschnitt sowie einem Abschnitt mit einem thermisch expandierten Kern aufweist, das nach dem Verfahren nach Anspruch 1 oder nach Anspruch 12 hergestellt ist,
wobei die zweite Glasfaser eine polarisationserhaltende Glasfaser ist,
wobei die erste Glasfaser im Zentrum des expandierten Abschnitts der Faser gebrochen wird.

16. Verfahren zur Herstellung eines Modenfeldadapters nach Anspruch 15, **dadurch gekennzeichnet, dass** der Modenfelddurchmesser der zweiten Glasfaser größer ist als der Modenfelddurchmesser der ersten Glasfaser in ihrem nicht expandierten Abschnitt.

17. Verfahren zur Herstellung eines Modenfeldadapters nach Anspruch 15 oder 16, **dadurch gekennzeichnet, dass** die zweite Glasfaser und die erste Glasfaser einen Mantel mit demselben Außendurchmesser aufweisen.

18. Ein Modenfeldadapter **dadurch gekennzeichnet, dass** es die erste Glasfaser umfasst, die mit der zweiten Glasfaser gespleißt ist,
wobei die erste Glasfaser die polarisationserhaltende Glasfaser mit einem thermisch expandierten Kernteil ist, das nach dem Verfahren nach Anspruch 1 oder nach Anspruch 12 hergestellt ist,

19. Der Modenfeldadapter nach Anspruch 18, **dadurch gekennzeichnet, dass** der Übertragungsverlust zwischen der ersten Glasfaser und der zweiten Glasfaser 0.3dB bis 1,1dB, bevorzugt 0,55dB bis 1,01dB beträgt.

20. Der Modenfeldadapter nach Anspruch 18, **dadurch gekennzeichnet, dass** die Übertragung zwischen den Fasern mindestens 79%, bevorzugt 79% bis 93%, mehr bevorzugt 79.3% bis 88.2% beträgt.

## Revendications

1. Procédé de fabrication d'un cœur thermiquement dilaté dans une fibre optique à maintien de polarisation, comprenant les étapes suivantes :
a) une étape de placement d'une fibre optique dépourvue de revêtement acrylate,
b) une étape de dilatation thermique du cœur dans une portion de la fibre optique,
dans lequel la portion de la fibre optique est chauffée à au moins 1200 °C,
**caractérisé en ce que** ladite étape de placement comprend le placement de ladite fibre dans un support d'une soudeuse, et **en ce que** ladite fibre est chauffée par exposition à un train d'impulsions laser, et la fibre optique, entre les impulsions laser, est tournée au moins une fois d'un angle de 0,1° à 90° pour chauffer uniformément la fibre.

2. Procédé selon la revendication 1, **caractérisé en ce que** le train d'impulsions laser est une séquence de trois à douze impulsions, de préférence quatre impulsions laser.

3. Procédé selon la revendication 2, **caractérisé en ce que** la durée d'une impulsion laser est de 1 s à 40 s, de préférence la durée de l'impulsion est de 2 s à 5 s.

4. Procédé selon la revendication 2 ou 3, **caractérisé en ce que** la séquence de quatre impulsions laser comprend les trois premières impulsions d'une durée de 5 s et la quatrième impulsion d'une durée de 2 s.

5. Procédé selon la revendication 1 ou 4, **caractérisé en ce que** l'intervalle entre chaque impulsion laser est de 2 s à 4 s.

6. Procédé selon la revendication 1, **caractérisé en ce que** la fibre optique est tournée par rapport à son axe longitudinal.

7. Procédé selon l'une quelconque des revendications 1 à 6, **caractérisé en ce que** la fréquence de répétition des impulsions laser est inférieure à 1/9 Hz.

8. Procédé selon la revendication 1 ou 4, **caractérisé en ce que** la fibre optique est chauffée sur une longueur de 1 mm à 10 mm, de préférence 4 mm ± 0,5 mm.

9. Procédé selon la revendication 1 ou 8, **caractérisé en ce que** la fibre optique est tournée d'au moins un angle allant de 10° à 90°.

10. Procédé selon la revendication 1, 8 ou 9, **caractérisé en ce que** la fibre optique est une fibre optique de type PANDA ou nœud papillon.

11. Procédé selon la revendication 1, 8, 9 ou 10, **caractérisé en ce que** la fibre optique est une fibre en silice fondue dopée, de préférence avec le cœur dopé au GeO₂ et les barreaux de contrainte dopés au B₂O₃.

12. Procédé selon la revendication 1, 8, 9 ou 10, **caractérisé en ce que** la puissance des impulsions laser est supérieure d'au moins 1 % à 17 % à la puissance de calibrage du laser, de préférence un laser au CO₂.

13. Fibre optique à maintien de polarisation présentant une portion non dilatée et une portion à cœur thermiquement dilaté fabriquée selon le procédé tel que défini à la revendication 1, **caractérisée en ce qu'**elle comprend un cœur dilaté et des barreaux de contrainte dilatés, dans laquelle le cœur dilaté et les barreaux de contrainte dilatés ont la même forme que le cœur non dilaté et les barreaux de contrainte non dilatés, et les barreaux de contrainte dilatés ne sont pas déformés et restent sans contact direct avec le cœur dilaté de la fibre.

14. Utilisation d'une fibre optique à maintien de polarisation à cœur thermiquement dilaté fabriquée selon le procédé tel que défini à la revendication 1 ou telle que définie à la revendication 13, pour la fabrication d'un adaptateur de champ modal.

15. Procédé de fabrication d'un adaptateur de champ modal comprenant les étapes suivantes :
a) une étape de clivage de la première fibre optique selon un angle inférieur à 2°,
b) une étape de soudure de la portion dilatée de la première fibre optique à la seconde fibre optique avec une puissance de calibrage standard d'un laser, de préférence un laser au CO₂,
dans lequel la première fibre optique est une fibre à maintien de polarisation présentant une portion non dilatée et une portion à cœur thermiquement dilaté fabriquée selon le procédé tel que défini à la revendication 1 ou telle que définie à la revendication 13,
dans lequel la seconde fibre optique est une fibre optique à maintien de polarisation,
dans lequel la première fibre optique est clivée au centre de la portion dilatée de la fibre.

16. Procédé de fabrication d'un adaptateur de champ modal selon la revendication 15, **caractérisé en ce que** le diamètre de champ modal de la seconde fibre optique est supérieur au diamètre de champ modal de la première fibre optique dans sa portion non dilatée.

17. Procédé de fabrication d'un adaptateur de champ modal selon la revendication 15 ou 16, **caractérisé en ce que** la seconde fibre optique et la première fibre optique ont des gaines de même diamètre extérieur.

18. Adaptateur de champ modal fibré, **caractérisé en ce qu'**il comprend la première fibre optique soudée à la seconde fibre optique,
dans lequel la première fibre optique est une fibre optique à maintien de polarisation présentant une portion à cœur thermiquement dilaté fabriquée selon le procédé tel que défini à la revendication 1 ou telle que définie à la revendication 13.

19. Adaptateur de champ modal fibré selon la revendication 18, **caractérisé en ce que** la perte de transmission entre la première fibre optique et la seconde fibre optique est de 0,3 dB à 1,1 dB, de préférence de 0,55 dB à 1,01 dB.

20. Adaptateur de champ modal fibré selon la revendication 19, **caractérisé en ce que** la transmission entre les fibres est d'au moins 79 %, de préférence de 79 % à 93 %, plus préférentiellement de 79,3 % à 88,2 %.
